# EUROPEAN PATENT APPLICATION

(11) **EP 4 566 914 A1**
(43) Date of publication of application: **11.06.2025**
(21) Application number: 23862943.0
(22) Date of filing: 24.08.2023
(51) Int. Cl.: B62D 1/04, B60R 21/203

(54) **VEHICLE STEERING WHEEL DEVICE**

(30) Priority: 09.09.2022 JP 2022143824
(71) Applicant: Autoliv Development AB, 44783 Vargarda (SE)
(72) Inventor: ISHIDA, Ryotaro, Yokohama-shi, Kanagawa 222-8580 (JP); ABE, Kazuhiro, Yokohama-shi, Kanagawa 222-8580 (JP); HONMA, Keisuke, Yokohama-shi, Kanagawa 222-8580 (JP); KUMAR, Sumit Sharma, Yokohama-shi, Kanagawa 222-8580 (JP)
(74) Representative: Feucker, Max Martin
(86) International application number: PCT/JP2023/030429
(87) International publication number: WO 2024/053404

(57) **Abstract**

Provided is a device including: a housing 9 for holding an air bag cushion; a locking plate 8 provided on the back-side surface 9d of the housing with its plate surface overlaid thereon and provided with a damper unit assembled thereto; a coil spring for elastically supporting, on the steering wheel, the locking plate with the housing overlaid thereon; and a bushing 25 inserted through both the housing and the locking plate for fixing the coil spring. The bushing is fixed to the locking plate by being locked by means of a first locking means. The bushing having been fixed to the locking plate by means of the first locking means is fixed to the housing by being locked by means of a second locking means.

## Description

### TECHNICAL FIELD

The present invention relates to a vehicle steering wheel device capable of improving durability of a mounting and fixing portion of a coil spring when an accessory member or an accessory component is mounted on a steering wheel of a vehicle in an elastically supported state via the coil spring.

### BACKGROUND ART

Various structures have been known in which various accessory members and accessory parts such as an airbag module and a horn circuit are attached, in an elastically supported state, to a steering wheel of a vehicle via a coil spring.

In Patent Document 1 entitled "Damper Unit for Airbag Module and Steering Wheel," a steering wheel includes a steering wheel body, and an airbag module attached to the steering wheel body via a horn plate and a plurality of damper units. The damper unit includes a protector, a rubber bushing, and a resin bushing. A coil spring is interposed between the leg piece portion and the core metal portion of the protector in a state of force accumulation.

In Patent Document 2 entitled "Steering Wheel," a tip end portion of a pin protruding from an airbag module protrudes from a back-side surface of a horn plate through a tubular guide member provided in the horn plate. A tapered surface is provided on the tip side of the pin, and a lock spring provided on the back-side surface of the horn plate is pressed against the tapered surface. The airbag module is pressed against the rubber mount provided on the pedestal portion of the horn plate, and the mount seat portion is compressed. The distance between the horn switch and the rubber mount is equal to or less than 15 mm.

### CITATION LIST

### Patent Documents

Patent Document 1: Japanese Unexamined Patent Application Publication No. 2017-159696
Patent Document 2: Japanese Unexamined Patent Application Publication No. 2019-006341

### SUMMARY OF INVENTION

### TECHNICAL PROBLEM

The steering wheel serves as a transmission path of vibration such as traveling vibration from a road surface. For this reason, vibration is input to various accessory members and various accessory parts to the steering wheel, and vibration is also input to the coil spring interposed between the steering wheel and these accessory members and the like. As a result, it is considered that backlash occurs in the attachment fixing portion of the coil spring, and a countermeasure capable of improving the durability of the attachment fixing portion has been desired.

The inventor considered the problem mentioned above, and thus arrived at the idea of the present invention. It is therefore an object of the present invention to provide a steering wheel device for a vehicle, which is capable of improving the durability of an attachment fixing portion of a coil spring when an accessory member or an accessory component is attached, in an elastically supported state, to a steering wheel of a vehicle via the coil spring.

### SOLUTION TO PROBLEM

A vehicle steering wheel device according to an aspect of the present invention comprises: a holding plate configured to hold an accessory member to a steering wheel of a vehicle; an assembling plate member which is provided so as to be overlaid on the holding plate member and to which an accessory component to the steering wheel is assembled; a coil spring elastically supporting, on the steering wheel, the assembling plate member on which the holding plate member is overlaid; and a bushing inserted through both of the holding plate member and the assembling plate member to fix the coil spring, wherein the bushing is locked and fixed to the assembling plate member by means of a first locking means, and wherein the bushing fixed to the assembling plate member by means of the first locking means is locked and fixed to the holding plate member by means of a second locking means.

It is preferable that the first locking means should include: a first through-hole which is formed around the bushing in the assembling plate and through which the bushing is inserted so as to be rotatable about the bushing; a plurality of hooks formed at intervals in the bushing so as to be elastically bendable around the bushing; a pressing collar portion which is formed in the first through-hole toward an inner side of the first through-hole and which elastically bends the hooks moved by the rotation of the bushing; a pair of engaging portions formed on the bushing and configured to be engaged with the pressing collar portion from both a front side and a back side by the rotation of the bushing so as to support the bushing on the assembling plate member; and a groove portion formed in the pressing collar portion and configured to elastically restore the hook moved by the rotation of the bushing and to lock the hook so as to prevent the rotation of the bushing.

It is preferable that the second locking means should include: a second through-hole which is formed in the holding plate member and through which the bushing locked and fixed to the assembling plate member by the first locking means is inserted; and a stopper projection formed on the bushing outward from the bushing, wherein the second through-hole has a locking collar portion formed toward the inside of the second through-hole and locking the stopper projection so as to suppress the rotation of the bushing.

### ADVANTAGEOUS EFFECTS OF INVENTION

In the vehicle steering wheel device according to the present invention, when the accessory member or the accessory component is attached, in an elastically supported state, to the steering wheel of the vehicle via the coil spring, the durability of the attachment and fixing portion of the coil spring can be improved.

### BRIEF DESCRIPTION OF DRAWINGS

FIG. 1 is a perspective view illustrating a steering wheel to which the vehicle steering wheel device according to an embodiment of the present invention is applied.
FIG. 2 is a side cross-sectional view of the steering wheel of FIG. 1.
FIG. 3 is an exploded perspective view of an exemplar airbag module provided in the steering wheel of FIG. 1.
FIG. 4 is a perspective view of the airbag module illustrated in FIG. 3 seen from the back-side surface thereof.
FIG. 5 is an explanatory diagram of a housing applied to the vehicle steering wheel device according to an embodiment of the present invention.
FIG. 6 is an explanatory diagram of a locking plate applied to the vehicle steering wheel device according to an embodiment of the present invention.
FIG. 7 is an explanatory diagram generally illustrating how to attach, via a bushing, a coil spring to the locking plate illustrated in FIG. 6.
FIG. 8 is an explanatory diagram of a bushing applied to the vehicle steering wheel device according to an embodiment of the present invention.
FIG. 9 is an explanatory diagram illustrating how to attach a bushing to a locking plate in a vehicle steering wheel device according to an embodiment of the present invention.
FIG. 10 is an explanatory diagram illustrating how to attach a bushing to a housing in a vehicle steering wheel device according to an embodiment of the present invention.
FIG. 11 is a sectional view of the P region in FIG. 10C shown as developed.

### DESCRIPTION OF EMBODIMENTS

A suitable embodiment of the vehicle steering wheel device according to the present invention is described in detail below with reference to the accompanying drawings.

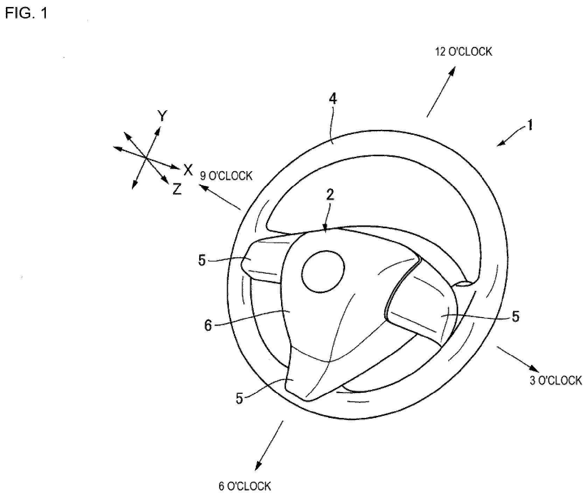

FIG. 1 to FIG. 6 illustrate a vehicle steering wheel 1 and an airbag module 2 attached thereto.

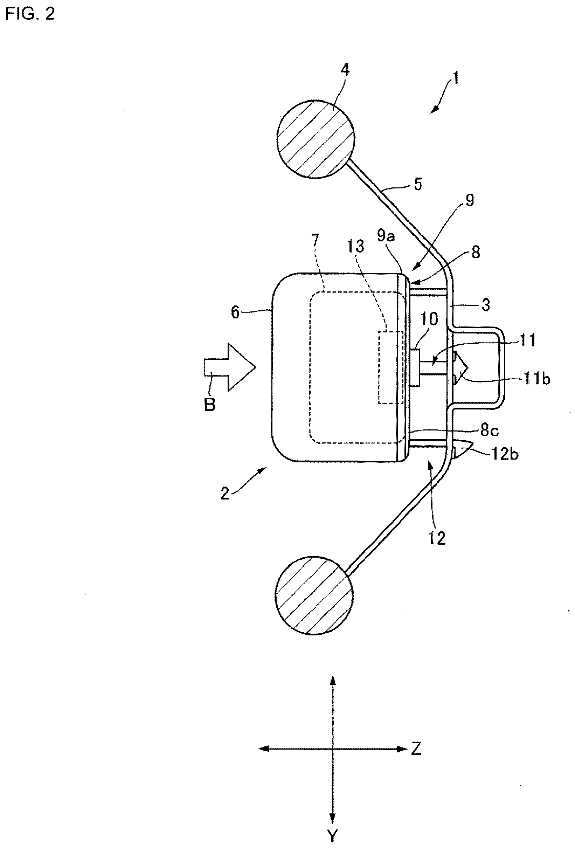

FIG. 1 is a perspective view generally illustrating a steering wheel 1 to which an airbag module 2 is attached. FIG. 2 is a side cross-sectional view thereof.

In the following drawings, including in FIG. 1, each direction is illustrated with an assumption that the steering wheel 1 mounted on the vehicle is in the neutral steering position.

The neutral steering position refers to a position where the steering angle of the steering wheel 1 is "zero" and the steered front wheels face in a straight direction.

In the drawings, the Z axis of the three-dimensional coordinate system (hereinafter, also referred to as "Z axis direction") is an axis parallel to the rotation axis of an unillustrated steering shaft. The directions of the Z axis are: a downward direction, which is a direction, along the steering shaft, toward the front wheels; and an upward direction, which is a direction toward the steering wheel 1. In terms of the relationship with other members, the Z-axis directions are directions parallel to the axis of a coil spring 24, which is described later. The Z-axis directions are also parallel to a direction in which the housing 9 serving as a holding plate member and the locking plate 8 serving as an assembling plate member are overlapped with each other.

Similarly, the directions of the X-axis of the three-dimensional coordinate system are from the 3 o'clock direction (right-hand side) to the 9 o'clock direction (left-hand side), and vise versa, of an analog clock on a plane perpendicular to the Z-axis, and the directions of the Y-axis are from the 12 o'clock direction (upside) to the 6 o'clock direction (downside), and vise versa, thereof on the same plane. In addition, the side seen from the side of the driver shall be described as the front side and the opposite side as the back side.

The steering wheel 1 is installed on the driver's seat side of the vehicle, and is connected to the steering shaft to transmit the steering operation by the driver to the steering gear and the like.

An airbag module 2, which functions as a driver's seat airbag in the event of an emergency, is provided in the center of the steering wheel 1.

Under normal operation, the airbag module 2 functions as a horn switch, which the driver presses to cause the horn to sound.

The airbag module 2 further functions as a module damper for damping vibrations of the steering wheel 1.

The steering wheel 1 is made of a metal and is primarily composed of a center boss section 3, a rim 4 for the driver to grip, and spokes 5, which connect the boss section 3 and the rim 4. To the boss section 3, the steering shaft is connected.

Now, a structure of the airbag module 2 is described below. The airbag module 2 on the driver side is covered with a horn cover 6, which is made of resin and functions as a design surface.

Inside the horn cover 6, an airbag cushion 7 is accommodated in a folded state. In the event of an emergency, the airbag cushion 7 is deployed and expanded.

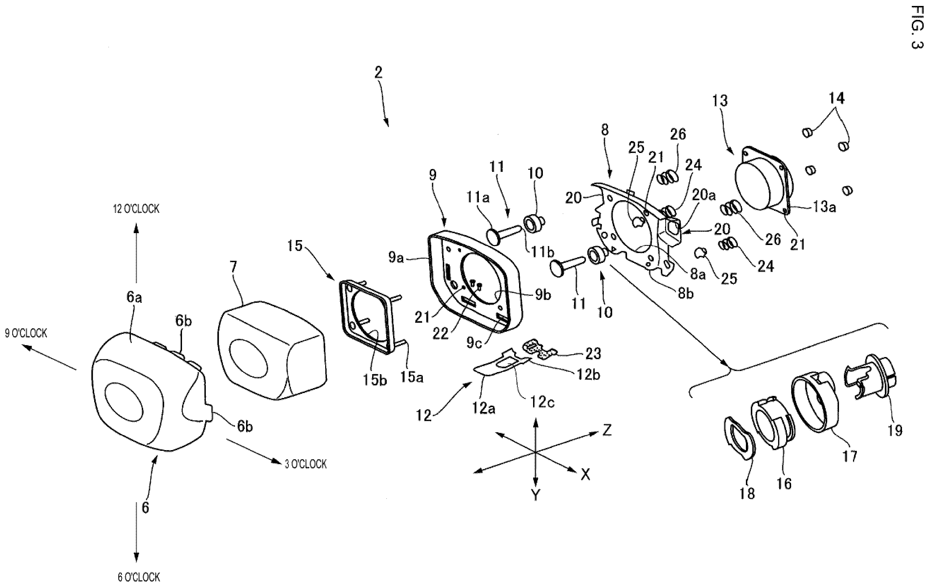

As illustrated in FIG. 3, the airbag module 2 is composed of: a metal locking plate 8; a metal housing 9 formed in a dish shape with a peripheral wall 9a provided on the front surface side thereof and with its plate surface overlaid on the surface of the locking plate 8; two hollow tubular damper units 10; pins 11 slidably inserted into hollow interiors of their respective damper units 10 and thus connecting the airbag module 2 to the boss section 3 of the steering wheel 1; a coupling member 12 provided on the housing 9, formed in a hook shape configured to be locked by the boss section 3 of the steering wheel 1, and configured to slide in the Z-axis direction to couple the airbag module 2 with the boss section 3; an inflator 13 supplying an inflator gas to the airbag cushion 7; a metal retainer ring 15 having a bolt 15a to which a nut 14 is fastened to fix the airbag cushion 7, the inflator 13, and the like to the housing 9; and the horn cover 6, which accommodates the airbag cushion 7.

As will be described later, the damper unit 10 is an exemplar accessory component to the steering wheel 1, and is assembled to a locking plate 8 serving as an assembling plate member.

As will be also described later, the airbag cushion 7 is an exemplar accessory member to the steering wheel 1, and is held by a housing 9 serving as a holding plate member.

The damper unit 10 is a member for elastically mounting the airbag module 2 to the steering wheel 1, and forms the central portion of the module damper.

Briefly, the damper unit 10 is configured by housing, inside a holder 17, a ring-shaped elastic body 16 for damping vibrations, and locking an insulator plate 18 overlaid on an end of the elastic body 16 with a sleeve 19, which is inserted into and retained within the elastic body 16.

Each of the pins 11 provided in the damper unit 10 has a flange portion 11a at an end portion thereof. The pin 11 is inserted into the corresponding damper unit 10 from the housing 9 side so that the flange portion 11a abuts against the sleeve 19 of the damper unit 10.

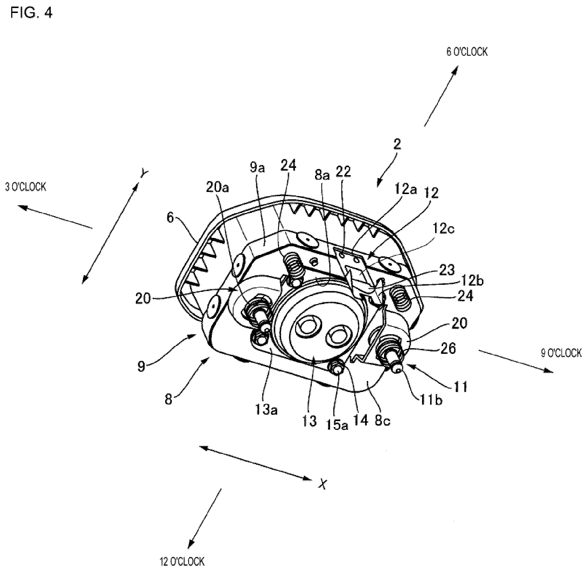

As illustrated in FIG. 4, the two damper units 10 are arranged side by side in the X-axis directions with the neutral position of the steering wheel 1 serving as a reference, and are disposed on both the left-hand and right-hand sides of the airbag module 2. To put it differently, when the steering angle of the steering wheel 1 is set to 0, the two damper units 10 are provided at positions in the 3 o'clock and 9 o'clock directions of the analog clock with respect to the central axis (steering shaft) of the steering wheel 1.

Each of the pins 11 is provided so as to protrude in an Z-axis direction from the damper unit 10 toward the boss section 3 of the steering wheel 1.

The housing 9 and the locking plate 8 are described below with reference to FIG. 3, FIG. 5A, and FIG. 6A.

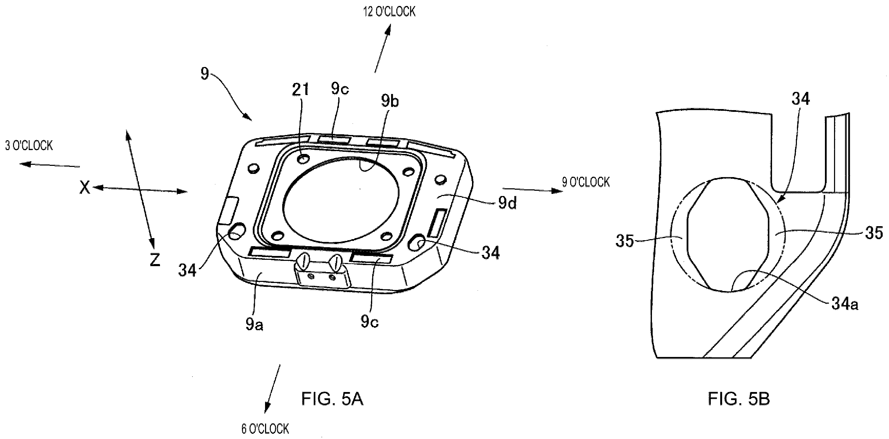

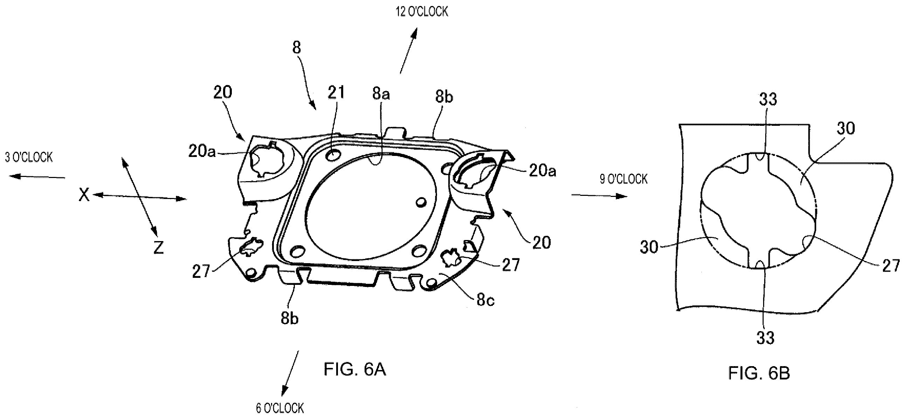

FIG. 5A is a perspective view of the housing 9 as viewed from the back-side surface thereof, and FIG. 6A is a perspective view of the locking plate 8 as viewed from the back side thereof.

The locking plate 8 is provided with a hole 8a for mounting the inflator. The hole 8a is formed through the center of the locking plate 8. The locking plate 8 is also provided with two recessed groove-like holding portions 20, which are formed in alignment with the arrangement of the two damper units 10 at positions separated from the hole 8a.

A locking hole 20a for locking and fixing the holder 17 of the damper unit 10 is formed through each of the holding portions 20.

An exemplar fixing structure for fixing the damper unit 10 to the locking hole 20a includes: the locking hole 20a and the holder 17 each formed in an elliptical shape defined by a long axis and a short axis. The holder 17 is inserted into the locking hole 20a by aligning the long axis and the short axis of the locking hole 20a with the long axis and the short axis of the holder 17, respectively. After that, the holder 17 is rotated to lock the holder 17 in the locking hole 20a. As a result, the damper unit 10 is assembled to the locking plate 8.

Once the pin 11 is inserted into the corresponding damper unit 10, a pointed head portion 11b formed at an end portion opposite to the flange portion 11a protrudes from the locking hole 20a toward the boss section 3 of the steering wheel 1 (see FIG. 4).

The housing 9 is formed in a size capable of covering substantially the entire locking plate 8 including the holding portions 20.

In the housing 9, a hole portion 9b is formed in the center thereof for passing the inflator 13 therethrough. Also in the housing 9, a peripheral wall 9a is formed at the outer edge position so as to be raised on the front side.

Once the flange portion 11a of the pin 11 is inserted into the damper unit 10, the flange portion 11a is held between the housing 9 and the holding portions 20 of the locking plate 8. Consequently, the pin 11 and the damper unit 10 are assembled and held between the housing 9 and the locking plate 8.

To assemble the locking plate 8 with the housing 9 with their respective plate surfaces overlaid one upon the other, an assembly protrusion 8b is formed in the locking plate 8 and a locking bore 9c is formed in the housing so that the assembly protrusion 8b can fit in the locking bore 9c.

Furthermore, an elastically deformable locking piece 6b formed on the tubular portion 6a of the horn cover 6 of the airbag module 2 is locked in the locking bore 9c of the housing 9.

Locking the locking piece 6c in the locking bore 9c attaches the horn cover 6 accommodating the airbag cushion 7 to the housing 9.

Further, bolt insertion bores 21 are formed in the housing 9 and the locking plate 8. Bolts 15a of the retainer ring 15 are inserted into and through the bolt insertion bores 21.

The coupling member 12 provided in the housing 9 has a joining part 12a joined to a peripheral wall 9a of the housing 9 with a rivet 22 at an end along a Z-axis direction, and also has a hook portion 12b locked to a boss section 3 of a steering wheel 1 at the other end. The coupling member 12 is formed of, for example, an elastically deformable plate-shaped metal plate or the like.

The coupling member 12 is provided, in parallel with the damper unit 10, between the steering wheel 1 and the airbag module 2 described above.

The hook portion 12b is covered with a resin-made elastic material 23 to electrically insulate the boss section 3 and the housing 9 from each other and to provide a cushioning effect.

The coupling member 12 has an opening 12c extending in the Z-axis directions between the joining portion 12a and the hook portion 12b. A protruding portion (not illustrated) of the boss section 3 is inserted into the opening 12c. The airbag module 2 is slidable in the Z-axis directions with respect to the boss section 3 by the length of the opening 12c measured in the Z-axis directions.

As illustrated in FIG. 2, the pins 11 and the coupling member 12 are components for attaching the airbag module 2 to the boss section 3 of the steering wheel 1 from a Z-axis direction.

Specifically, as illustrated in FIG. 4, the coupling member 12 is positioned in the lower side of the steering wheel 1 in the vertical directions (Y-axis directions) with the neutral position of the steering wheel 1 as the reference. In other words, when the steering angle of the steering wheel 1 is set to 0, the coupling member 12 is provided at a position in the direction of 6 o'clock of the analog clock with respect to the center axis (steering shaft) of the steering wheel 1.

In a positional relation to the damper units 10, the coupling member 12 is arranged in the center between the two damper units 10, at a position lower than (on the 6 o'clock side of) these damper units 10.

Therefore, the damper units 10 and the coupling member 12 are provided at their corresponding vertexes of an inverted isosceles triangle with respect to the airbag module 2.

In addition, as illustrated in FIG. 4, the airbag module 2 is provided with a pair of coil springs 24 on both sides of the coupling member 12 in the X-axis directions via bushings 25. The axis of each of the coil springs 24 is parallel to the Z-axis directions. The axis of each of the coil springs 24 refers to a line passing through the center of that coil spring 24 (also referred to as the coil spring axis).

More specifically, the coil springs 24 are disposed on the back-side surface 8c of the locking plate 8 and are held between the boss section 3 and the airbag module 2.

The inflator 13 has an outer peripheral flange 13a, which has bolt insertion bores 21 and abuts against the back-side surface of the locking plate 8.

Although not illustrated, the airbag cushion 7 has an insertion hole formed therein, into which the inflator 13 is inserted. Bolt insertion holes for inserting the bolts of the retainer ring 15 are formed around the insertion hole.

The retainer ring 15 is provided inside the airbag cushion 7. The retainer ring 15 has a hole 15b which communicates with the hole 9b of the housing 9 and the hole 8a of the locking plate 8. The hole 15b allows the inflater 13 to be positioned in the airbag cushion 7.

The retainer ring 15 is aligned with the insertion hole of the airbag cushion 7 so that the bolts 15a project from their respective bolt insertion bores.

Now, assembling of the airbag module is described below. The insertion hole of the airbag cushion 7 is aligned with the hole 9b of the housing 9, and the bolts 15a of the retainer ring 15 protruding from the airbag cushion 7 are inserted into their respective bolt insertion bores 21 of the housing 9.

Once the bolts 15a are inserted into their respective bolt insertion bores 21 of the housing 9, the periphery of the insertion hole of the airbag cushion 7 is held between the retainer ring 15 and the housing 9, and the airbag cushion 7 is installed in the housing 9.

As a result, the housing 9 holds the airbag cushion 7, which is an accessory member to the steering wheel 1.

On the other hand, to the locking plate 8, the damper units 10 are secured via their respective locking holes 20a after the damper units 10 are attached inside their respective holding portions 20 from the front-side surface side (housing 9 side) of the locking plate 8.

In each of the pin 11, a pointed end portion 11b is inserted into the corresponding damper unit 10 from the housing 9 side and protrudes out through the corresponding locking hole 20a of the locking plate 8.

Next, the housing 9 is put on the locking plate 8 from the front side, and the housing 9 and the locking plate 8 are overlaid one upon the other. The overlapping direction is parallel to the Z-axis directions.

The flange portion 11a of each of the pins 11 is held between the housing 9 and the locking plate 8 and is retained therebetween.

The outer peripheral flange 13a of the inflator 13 is made to abut the back-side surface 8c of the locking plate 8. The inflator 13 is thus inserted into the insertion hole of the airbag cushion 7 through the hole 8a of the locking plate 8, the hole 9b of the housing 9, and the hole 15b of the retainer ring 15.

The bolts 15a of the retainer ring 15 protruding from their respective bolt insertion bores 21 of the housing 9 are inserted into their respective bolt insertion bores 21 of the locking plate 8 and their respective bolt insertion bores 21 of the outer peripheral flange 13a of the inflator 13. Nuts 14 are provided on the back side of the locking plate 8 to fasten their respective bolts 15a.

As a result, the airbag cushion 7 and the inflator 13 are secured to and held by the housing 9, and the damper units 10, which are accessory components to the steering wheel 1, are assembled onto the locking plate 8.

The coupling member 12 attached to the housing 9 is arranged in parallel with the damper units 10 along the Z-axis directions.

Subsequently, the horn cover 6 is attached to the housing 9. In the horn cover 6, the locking piece 6b is locked in the locking bore 9c of the housing 9.

In this way, the airbag module 2 is assembled.

Suppose a case where the airbag module 2 is attached to the steering wheel 1 in the Z-axis directions. In this case, as shown in FIG. 3 and FIG. 4, coiled horn springs 26, which are elastically deformable elastic members, are provided between the boss section 3 and the locking plate 8 so as to surround the pins 11. A pair of coil springs 24 are attached to each of the bushings 25 located on both sides of the coupling member 12.

The coil springs and the horn springs 26 are made to abut the boss section 3, and thus elastically support the airbag module 2 for the steering wheel 1.

The horn springs 26 secure a gap located between the boss section 3 and the airbag module 2, and the gap is provided for horn operations.

When the airbag module 2 is attached to the boss section 3, the pins 11, specifically their respective pointed end portions 11b, are inserted into and held in their respective attachment bores (not illustrated) formed in the boss section 3, with the coil springs 24 and the horn springs 26 in an elastically compressed state. At the same time, the hook portion 12b of the coupling member 12 is locked with the boss section 3.

The airbag module 2 is thus attached and coupled to the steering wheel 1 in the Z-axis directions via the damper units 10 and the coupling member 12.

As a result, the airbag module 2 is elastically supported, via the damper units 10, by the horn spring 26 relative to the steering wheel 1, with the airbag module 2 coupled to the steering wheel 1 so as to be movable (i.e., so as to be capable of being pressed) toward the steering wheel 1 (see FIG. 2B).

The damper units 10, which are disposed between the airbag module 2 and the steering wheel 1, damp vibrations of the steering wheel 1.

The vibrations of the steering wheel 1 are transmitted to the damper units 10 via their respective pins 11. The transmitted vibrations are damped by the elastic body 16 of the damper units 10, with the airbag module 2 serving as a damper mass.

When a signal is sent from the vehicle sensors during an emergency event, the inflator gas is supplied from the inflator 13 to the airbag cushion 7.

Once the inflation gas is supplied to the airbag cushion 7, the airbag cushion 7 ruptures the horn cover 6 and is expanded and deployed into the vehicle interior space to restrain the driver.

Now, a description is provided regarding the horn function. When the airbag module 2 is pressed in the Z-axis direction toward the steering wheel 1, the entire airbag module 2 including the damper units 10 slides against the pins 11 retained in the boss section 3, and the horn springs 26 are elastically compressed and deformed.

As a result, the contacts provided on the airbag module 2 and on the boss section 3 are electrically connected with each other, thereby causing the horn to sound.

When pressing of the airbag module 2 is canceled, each of the horn springs 26 is elastically restored to the original shape such that the airbag module 2 is retracted to separate the contact points from each other, thereby stopping the sounding.

Hence, the airbag module 2 and the steering wheel 1 form a conductive circuit.

The coil springs 24, which are disposed on the back-side surface 8c of the locking plate 8 and held between the boss section 3 and the air bag module 2, elastically support the air bag module 2 from the boss section 3 side around the coupling member 12 disposed on the 6 o'clock side.

The coil springs 24 ensure stable support of the airbag module 2 when the horn is not operated, and ensures also favorable pressing operability of the airbag module 2 for the horn operation.

Specifically, the coil springs 24 elastically support, with respect to the boss section 3, the locking plate 8 on which the housing 9 is overlaid.

A structure in which the coil springs 24 are attached to the airbag module 2 using the bushings 25 will be described in detail with reference to FIG. 5 to FIG. 11.

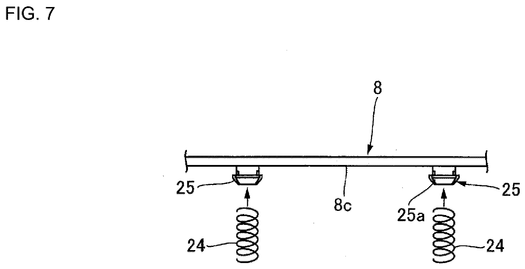

FIG. 7 illustrates how the coil spring 24 is attached to the locking plate 8 via a bushing 25.

FIG. 5B is an enlarged view of a main part of the housing 9, and FIG. 6B is an enlarged view of a main part of the locking plate 8.

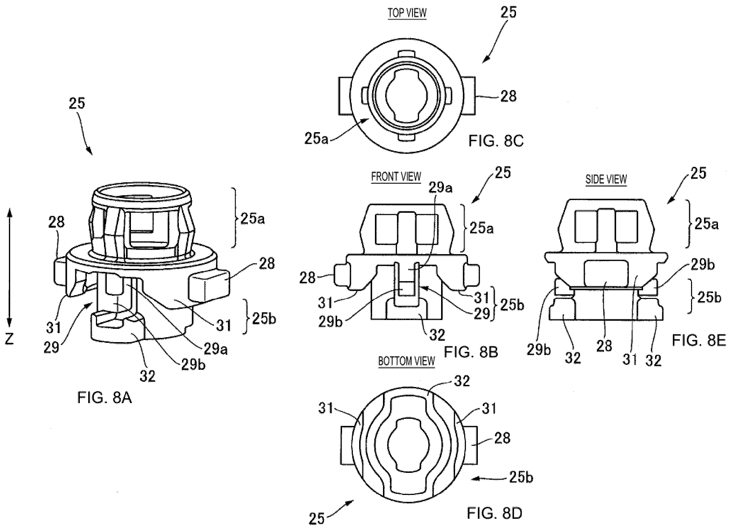

FIGS. 8A to 8E are a perspective view, a front view, a top view, a bottom view, and a side view of the bushing 25, respectively.

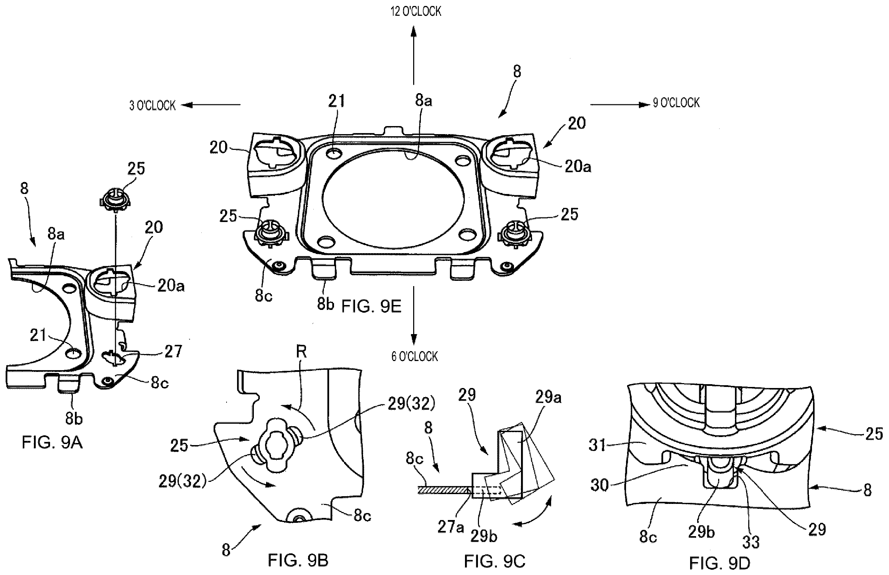

FIG. 9 is an explanatory diagram for describing how to attach the bushing 25 to the locking plate 8. FIG. 9A is a perspective view illustrating how to assemble the bushing 25 to the locking plate 8. FIG. 9B is an explanatory diagram for describing how to lock the bushing 25 by means of a first locking means. FIG. 9C is an explanatory diagram for describing the motion while the bushing 25 is being locked by the first locking means. FIG. 9D is an explanatory diagram for describing the state in which the bushing 25 is locked by means of the first locking means. FIG. 9E is a perspective view illustrating the state in which the bushing 25 is fixed to the locking plate 8.

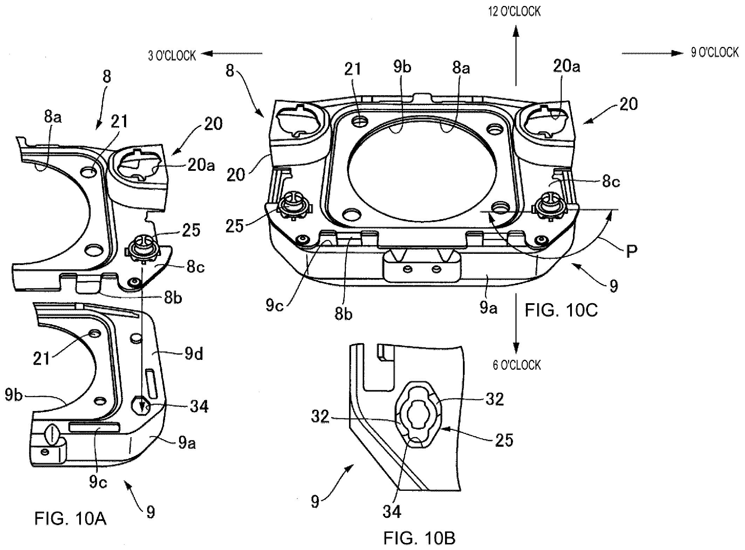

FIG. 10 is an explanatory diagram for describing how to attach the bushing 25 to the housing 9. FIG. 10A is a perspective view illustrating how to assemble the bushing 25 to the housing 9. FIG. 10B is an explanatory diagram for describing a state in which the bushing 25 is locked by means of a second locking means. FIG. 10C is a perspective view illustrating a state in which the bushing 25 is fixed to the housing 9.

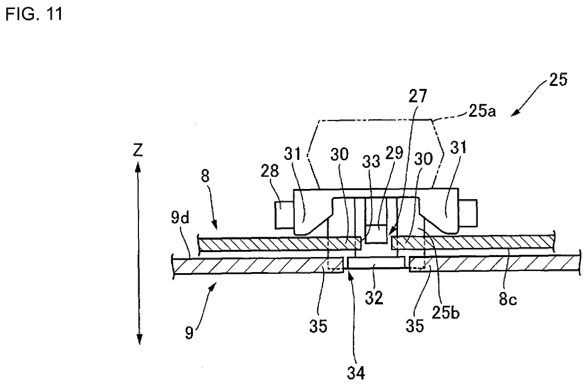

FIG. 11 is a sectional view of the P region in FIG. 10C shown as developed.

The bushing 25 is inserted into both the locking plate 8 and the housing 9 to secure the coil springs 24 to the airbag module 2.

The bushing 25 according to the present embodiment is formed of a synthetic resin material in a substantially hollow tubular shape.

As illustrated in FIG. 8, the bushing 25 includes: a spring holding portion 25a provided on one side (boss section 3 side) along the Z-axis direction; and an anchoring portion 25b provided on the other side (airbag module 2 side) therealong.

One end portion, in the longitudinal direction, of the coil spring 24 is held by the spring holding portion 25a, whereby the coil spring 24 is attached to and fixed to the bushing 25 (see FIG. 7).

The bushing 25 is fixed by the anchoring portion 25b, which is locked to the locking plate 8 by means of the first locking means and which is locked to the housing 9 by means of the second locking means. The bushing 25 is attached to the air bag module 2 by means of the fixing accomplished by the double locking.

The double locking of the bushing 25 means that firstly the bushing 25 by itself is locked to the locking plate 8 by means of the first locking means and secondly the bushing 25 having been attached to the locking plate 8 is locked together with the locking plate 8 to the housing 9 by means of the second locking means.

The first locking means and the second locking means may have any configurations as long as they individually lock the bushing 25 to the locking plate 8 and the housing 9, respectively, so as to stop or suppress the motion of the bushing 25.

In the present embodiment, the first locking means is composed of the bushing 25 and the locking plate 8.

As illustrated in FIG. 6B, a first through-hole 27 is formed in the locking plate 8. The bushing 25 is inserted through the first through-hole 27, so as to be rotatable about the bushing 25, that is, around the Z-axis thereof.

The size of the first through-hole 27 is set such that the anchoring portion 25b of the bushing 25 can be inserted through the first through-hole 27.

As illustrated in FIG. 8, a plurality of hooks 29 are formed on the anchoring portion 25b of the bushing 25. The hooks 29, which are elastically bendable, are formed at intervals around the bushing 25.

In the illustrated example, two hooks 29 are formed at 180° intervals from each other. Each of the hooks 29 is formed in an L-shape, in which a base end 29a is connected to the bushing 25.

When the bushing 25 is inserted through the first through-hole 27, the hook 29 is disposed so that the L-shaped free end 29b faces the hole edge 27a of the first through-hole 27 (see FIG. 9C). The hook 29 is elastically bent toward the hollow inside of the bushing 25.

As illustrated in FIG. 6B, a pressing collar portion 30 is formed in the first through-hole 27. The pressing collar portion 30 protrudes toward the inside of the first through-hole 27.

Hence, the size of the first through-hole 27 is narrowed by the pressing collar portion 30. In the illustrated example, two pressing collar portions 30 are provided for two hooks 29.

When the bushing 25 is rotated as illustrated in FIG. 9B, the hook 29 is moved along the hole edge 27a of the first through-hole 27 by the rotation. As a result, the pressing collar portion 30 elastically bends the hook 29, as illustrated in FIG. 9C.

In the bushing 25, a pair of engaging portions are formed that avoid the hook 29. The pair of engaging portions are configured to engage with the pressing collar portion 30 from both the front side and the back side.

To be more specific, as illustrated in FIG. 8, with reference to the position of the free end 29b of the hook 29, a first engaging portion 31 engaging with the back-side surface of the pressing collar portion 30 is formed to protrude outward in an arc shape on the side of the spring holding portion 25a, and a second engaging portion engaging with the front-side surface of the pressing collar portion 30 is formed to protrude outward in a projection shape on the opposite side so as to be positioned between the first engaging portions 31 and to overlap with the hook 29 with a clearance in the Z-axis direction from the hook 29.

In the present embodiment, the second engaging portion also serves as the stopper projection 32 (hereinafter, the second engaging portion is referred to as a stopper projection).

In the illustrated example, two first engaging portions 31 and two stopper projections 32 are provided so as to correspond to the two pressing collar portions 30.

In the drawing, the reference numerals 28 are protruding portions to each of which a jig is attached to rotate and move the bushing 25 (see arrows R in FIG. 9B).

When the hook 29 is elastically bent by the pressing collar portion 30 upon the rotation of the bushing 25, the first engaging portion 31 and the stopper projection 32 are slidably moved with respect to the pressing collar portion 30 by the rotation of the bushing 25 while being engaged with the pressing collar portion 30 from both the front side and the back side.

As illustrated in FIG. 6B, a groove portion 33 is formed by a partial cutout in the pressing collar portion 30. The hook 29 enters the groove portion 33.

As illustrated in FIG. 9D, the hook 29, which has been rotated in an elastically bent state by the pressing collar portion 30, which protrudes toward the inside of the first through-hole 27, is elastically restored by the groove portion 33.

In addition, the groove portion 33 locks the elastically restored hook 29 in the circumferential direction of the first through-hole 27 to prevent the rotation of the bushing 25.

When the hook 29 is locked in the groove portion 33, the bushing 25 is supported against the locking plate 8 by the first engaging portion 31 and the stopper projection 32 which are engaged with the pressing collar portion 30 from the front side and back side, respectively.

The hook 29 is locked with the pressing collar portion 30 provided in the first through-hole 27. In addition, the pair of the first engaging portion 31 and the stopper projection 32 are engaged with the pressing collar portion 30. As illustrated in FIG. 9E, the bushing 25 is locked and fixed, by the first locking means, to the locking plate 8 in a state where the spring holding portion 25a protrudes from the locking plate 8 toward the boss section 3.

As illustrated in FIG. 9A, the bushing 25 is attached from the back-side surface 8c of the locking plate 8.

During the attachment, the anchoring portion 25b including the hook 29 and the stopper projection 32 is inserted into the first through-hole 27 so as to avoid the pressing collar portion 30, and then the bushing 25 is rotated to a position where the hook 29 is locked in the groove portion 33.

In the present embodiment, the second locking means is composed of a stopper projection 32 formed on the anchoring portion 25b of the bushing 25 and a second through-hole 34 formed in the housing 9.

As described above, the stopper projection 32 is also used as the second engaging portion that is configured to engage with the pressing collar portion 30.

As illustrated in FIG. 5B, a second through-hole 34 is formed in the housing 9, through which the bushing 25 is inserted.

The above-described first through-hole 27 is formed to have a size that allows the stopper projection 32 to pass therethrough in order to position the stopper projection 32 with respect to the hole edge 34a of the second through-hole 34 by inserting the bushing 25 from the back-side surface 8c side of the locking plate 6.

The second through-hole 34 is set to be slightly larger than the first through-hole 27 with a margin.

As illustrated in FIG. 5B, a locking collar portion 35 is formed in the second through-hole 34 so as to protrude toward the inside of the second through-hole 34.

As illustrated in FIG. 10B, when the bushing 25 is fitted into the second through-hole 34, the locking collar portion 35 locks the stopper projection 32 in the form of a projection located on the hole edge 34a of the second through-hole 34 to suppress the rotation of the bushing 25 in the directions of rotation of the bushing 25 about the Z-axis.

In the illustrated example, two locking collar portions 35 are formed so as to correspond to the two stopper projections 32.

These locking collar portions 35 press and lock the two stopper projections 32 from both sides of the bushing 25 so as to prevent the stopper projections 32 from rotating around the bushing 25 with respect to the second through-hole 34.

As illustrated in FIG. 10A, the locking plate 8 to which the bushing 25 is fixed is attached from the back-side surface 9d of the housing 9.

The second locking means prevents, from rotating on the housing 9 side, the bushing 25 locked and fixed at a predetermined rotational position with respect to the locking plate 8 by the first locking means.

The bushing 25 is doubly locked and fixed by the second locking means for locking the stopper projection 32 with the locking collar portion 35 provided in the second through-hole 34, and by the housing 9 overlaid on the locking plate 8 as shown in FIG. 10C.

FIG. 11 illustrates the bushing 25 in a state doubly locked by the locking plate 8 and the housing 9.

The first locking means locks and fixes the bushing 25 to the locking plate 8 by making the pressing collar portion 30 (groove portion 33) of the first through-hole 27 lock the hook 29 and by making the pressing collar portion 30 with the first engaging portion 31 and the stopper projection 32. The second locking means locks and fixes the bushing 25 to the housing 9 by making the locking collar portion 35 of the second through-hole 34 lock the stopper projection 32 of the bushing 25. In this way, the bushing 25 is doubly locked.

In the present embodiment, the engagement of the bushing 25 with the pressing collar portion 30 and the locking of the bushing 25 by the locking collar portion 35 are ensured only by the stopper projection 32.

However, it is needless to say that the engagement with the pressing collar portion 30 and the locking by the locking collar portion 35 may be secured at different portions formed on the bushing 25.

In the vehicle steering wheel device according to the present embodiment, the bushing 25 is provided between the steering wheel 1 as a vibration transmission path and the airbag module 2 including the airbag cushion 7 as an accessory member and the damper unit 10 as an accessory component. In addition, the bushing 25 fixes the coil springs 24 to the airbag module 2. The coil springs 24 are elastically bent by the horn operation and receive the reaction force accompanying the deployment and expansion actions when the airbag is actuated. The bushing 25 is doubly locked and fixed to the airbag module 2 by means of the first locking means and the second locking means.

As a result, it is possible to prevent the coil spring 24 from being loosened or from rattling at the fixing portion of the coil spring 24 to the airbag module 2, thereby remarkably improving the durability and firmly attaching the airbag module 2 to the steering wheel 1.

The first locking means includes a pressing collar portion 30 in the first through-hole 27 of the locking plate 8 and the pressing collar portion 30 has a groove portion 33. The first locking means also includes a hook 29 and a pair of engaging portions (a first engaging portion 31 and a stopper projection 32) in the bushing 25. The hook 29 is locked in the groove portion 33 of the pressing collar portion 30 to prevent rotation of the bushing 25. In addition, the pressing collar portion 30 is engaged with a pair of engaging portions. In this way, the bushing 25 is supported by the locking plate 8.

The first locking means has a simple structure and can securely lock and fix the bushing 25 to the locking plate 8.

The second locking means is provided with a locking collar portion 35 in a second through-hole 34 of the housing 9 and is also provided with a stopper projection 32 in the bushing 25. While the bushing 25 is in a state of being locked and fixed to the locking plate 8 by means of the first locking means, the second locking means suppresses the rotation of the bushing 25 by the locking of the stopper projection 32 with the locking collar portion 35.

The second locking means also has an extremely simple structure and cooperates with the first locking means to securely lock and fix the bushing 25 to the housing 8.

Further, a strong and robust fixing structure of the bushing 25 can be secured in such a narrow space as that of about the plate thickness of the housing 9 and the locking plate 8.

The vehicle steering wheel device described above is a preferred example of the present invention, and other exemplar embodiments can also be implemented or carried out by various methods. In particular, unless otherwise described in the specification of the application, the invention is not restricted to the shapes, sizes, configuration, arrangements, and the like of the parts illustrated in detail in the accompanying drawings. In addition, the expressions and terms used in the specification of the application are used for providing a description, without limiting the invention thereto, unless specifically described otherwise.

For example, although two damper units 10 are provided in the directions of 3 o'clock and 9 o'clock of the analog clock as an example of the damper units 10 as the accessory components, the present invention is not limited to such an example. For example, in addition to these, another damper unit 10 may be provided in the 12 o'clock direction of the analog clock, or a single damper unit 10 may be provided only in the 12 o'clock direction of the analog clock. To put it differently, one or more accessory components may be provided.

### Addendum 1

A vehicle steering wheel device according to an aspect of the present invention comprises: a holding plate configured to hold an accessory member to a steering wheel 1 of a vehicle; an assembling plate member which is provided so as to be overlaid on the holding plate member and to which an accessory component to the steering wheel 1 is assembled; a coil spring 24 elastically supporting, on the steering wheel 1, the assembling plate member on which the holding plate member is overlaid; and a bushing 25 inserted through both of the holding plate member and the assembling plate member to fix the coil spring 24, wherein the bushing 25 is locked and fixed to the assembling plate member by means of a first locking means, and wherein the bushing 25 fixed to the assembling plate member by means of the first locking means is locked and fixed to the holding plate member by means of a second locking means.

### Addendum 2

The steering wheel device according to the addendum 1 may be characterized in that the first locking means includes: a first through-hole 27 which is formed around the bushing 25 in the assembling plate and through which the bushing 25 is inserted so as to be rotatable about the bushing 25; a plurality of hooks 29 formed at intervals in the bushing 25 so as to be elastically bendable around the bushing 25; a pressing collar portion which is formed in the first through-hole toward an inner side of the first through-hole and which elastically bends the hooks 29 moved by the rotation of the bushing 25; a pair of engaging portions formed on the bushing and configured to be engaged with the pressing collar portion 30 from both a front side and a back side by the rotation of the bushing 25 so as to support the bushing 25 on the assembling plate member; and a groove portion 33 formed in the pressing collar portion 30 and configured to elastically restore the hook 29 moved by the rotation of the bushing 25 and to lock the hook 29 so as to prevent the rotation of the bushing 25.

### Addendum 3

The steering wheel device according to the addendum 1 or 2 may be characterized in that, the second locking means may include: a second through-hole 34 which is formed in the holding plate member and through which the bushing 25 locked and fixed to the assembling plate member by the first locking means is inserted; and a stopper projection 32 formed on the bushing 25 outward from the bushing 25, and in that the second through-hole 34 has a locking collar portion 35 formed toward the inside of the second through-hole 34 and locking the stopper projection 32 so as to suppress the rotation of the bushing 25.

### Addendum 4

In the vehicle steering wheel device according to the addendum 1 to 3, the one or more accessory components may be provided at positions in a 3 o'clock direction and in a 9 o'clock direction of the assembling plate member when a steering angle of the steering wheel is 0.

### Addendum 5

In the steering wheel device according to the addendum 1 to 4, the one or more accessory components may be the damper units 10.

### Addendum 6

The steering wheel device according to the addendum 1 to 5 may further comprise a coupling member 12 that couples the holding plate member to the steering wheel 1, and the coupling member 12 may be provided at a position in the 6 o'clock direction of the steering wheel 1 when the steering angle of the steering wheel 1 is 0.

### Addendum 7

In the steering wheel device according to the addendum 6, the coupling member 12 may couple the holding plate member to the steering wheel so as to be slidable in a direction parallel to an axis of the coil spring 24.

### EXPLANATION OF CODES

1. Steering wheel
7. Airbag cushion
8. Locking plate
8c. Back-side surface of locking plate
9. Housing
9d. Back-side surface of housing
10. Damper unit
24. Coil spring
25. Bushing
27. First through-hole
29. Hook
30. Pressing collar portion
31. First engagement portion
32. Stopper projection
33. Groove portion
34. Second through-hole
35. Locking collar portion

## Claims

1. A vehicle steering wheel device comprising:
a holding plate member configured to hold an accessory member to a steering wheel of a vehicle;
an assembling plate member which is provided so as to be overlaid on the holding plate member and to which one or more accessory components to the steering wheel are assembled;
a coil spring elastically supporting, on the steering wheel, the assembling plate member on which the holding plate member is overlaid; and
a bushing inserted through both of the holding plate member and the assembling plate member to fix the coil spring,
wherein the bushing is locked and fixed to the assembling plate member by means of a first locking means, and
wherein the bushing fixed to the assembling plate member by means of the first locking means is locked and fixed to the holding plate member by means of a second locking means.

2. The vehicle steering wheel device according to claim 1, wherein the first locking means includes:
a first through-hole which is formed in the assembling plate member and through which the bushing is inserted so as to be rotatable about the bushing;
a plurality of hooks formed on the bushing at intervals around the bushing so as to be elastically bendable;
a pressing collar portion formed in the first through-hole toward an inside of the first through-hole and configured to elastically bend the hook moved by a rotation of the bushing; and
a pair of engaging portions formed on the bushing and configured to be engaged with the pressing collar portion from both a front side and a back side by the rotation of the bushing so as to support the bushing on the assembling plate member; and
a groove portion formed in the pressing collar portion and configured to elastically restore the hook moved by the rotation of the bushing and to lock the hook so as to prevent the rotation of the bush.

3. The vehicle steering wheel device according to claim 1 or 2, wherein the second locking means includes:
a second through-hole which is formed in the holding plate member and through which the bushing locked and fixed to the assembling plate member by the first locking means is inserted; and
a stopper protrusion formed on the bushing so as to extend outward from the bushing,
wherein the second through-hole has a locking collar portion which is formed toward an inside of the second through-hole and which locks the stopper projection so as to suppress a rotation of the bushing.

4. The vehicle steering wheel device according to claim 1 or 2, wherein the one or more accessory components are provided at positions in a 3 o'clock direction and a 9 o'clock direction of the assembling plate member when a steering angle of the steering wheel is 0.

5. The vehicle steering wheel device according to claim 4, wherein the one or more accessory components are damper units.

6. The vehicle steering wheel device according to claim 1 or 2, further comprising: a coupling member configured to couple the holding plate member to the steering wheel,
wherein the coupling member is provided at a position in a 6 o'clock direction of the steering wheel when a steering angle of the steering wheel is 0.

7. The vehicle steering wheel device according to claim 6, wherein the coupling member couples the holding plate member to the steering wheel so as to be slidable in a direction parallel to an axis of the coil spring.
